# EUROPEAN PATENT APPLICATION

(11) **EP 0 744 856 A2**
(43) Date of publication of application: **27.11.1996**
(21) Application number: 96303309.7
(22) Date of filing: 13.05.1996
(51) Int. Cl.: H04M 3/42, H04Q 3/00

(54) **Apparatus for and method of utilizing product identifier codes to establish communication connections**

(30) Priority: 26.05.1995 US 452048
(71) Applicant: AT&T IPM Corp., Coral Gables, Florida 33134 (US)
(72) Inventor: Penzias, Arno Allan, Chatham, New Jersey 07928 (US); Wellner, Pierre David, Middletown, New Jersey 07748 (US); Tuomenoksa, Mark Logan, Shrewsbury, New Jersey 07702 (US)
(74) Representative: Buckley, Christopher Simon Thirsk

(57) **Abstract**

Apparatus for and method of establishing a communication connection to enable a customer or user at a first location to establish a connection to a predefined second network address (e.g., an 800 telephone number) and thereafter enter a product identifier code which is converted to a third network address of an agent which is used to establish a connection between the user and the agent.

## Description

### Technical Field

This invention relates to communication systems and, more particularly, to a communication system and method which utilizes product identifier codes to establish communication connections.

### Background of the Invention

Presently, consumers may have a problem locating customer service information (e.g., telephone numbers) associated with a particular product or service that the consumers may have purchased. Typically, the consumer may have to search through product literature to locate the consumer service telephone number of the vendor of the product or service. While this may not be a big problem for products which include such literature, there are many products which do not provide such literature or any convenient method by which a user can easily locate consumer service telephone numbers. Additionally, the telephone numbers may change independent of the product code, making numbers listed in product literature out of date.

### Summary of the Invention

The present invention is directed to a communication system which enables a customer or user to establish a connection to a directory service network address (e.g., an 800 telephone number or a World Wide Web server address) and thereafter enter a product identifier code which is converted to a consumer agent's network address and used to establish a connection between the user and the consumer agent.

More particularly, the communication connection method of the present invention includes the steps of:
1) establishing a network connection to a second location using a second location network address entered at a first location;
2) sending, from the first location, a product identifier code associated with a product over the established connection to the second location;
3) converting, at the second location, the product identifier code to a third location network address associated with that product; and
   4) establishing a connection between the first location and a third location using the third location network address.

### Brief Description of the Drawing

In the drawings,
FIG. 1 shows an illustrative communication system incorporating the present invention;
FIG. 2 shows a Universal Product Code (UPC) which is used as an illustrative product identifier code in the present invention;
FIG. 3 is an illustrative flowchart describing the operations of the present invention;
FIG. 4 shows a table which is used to convert manufacturer's product identifier codes and other manufacturer's information to consumer agent network addresses; and
FIGS. 5-7 show three possible network connections between the parties.

### Detailed Description

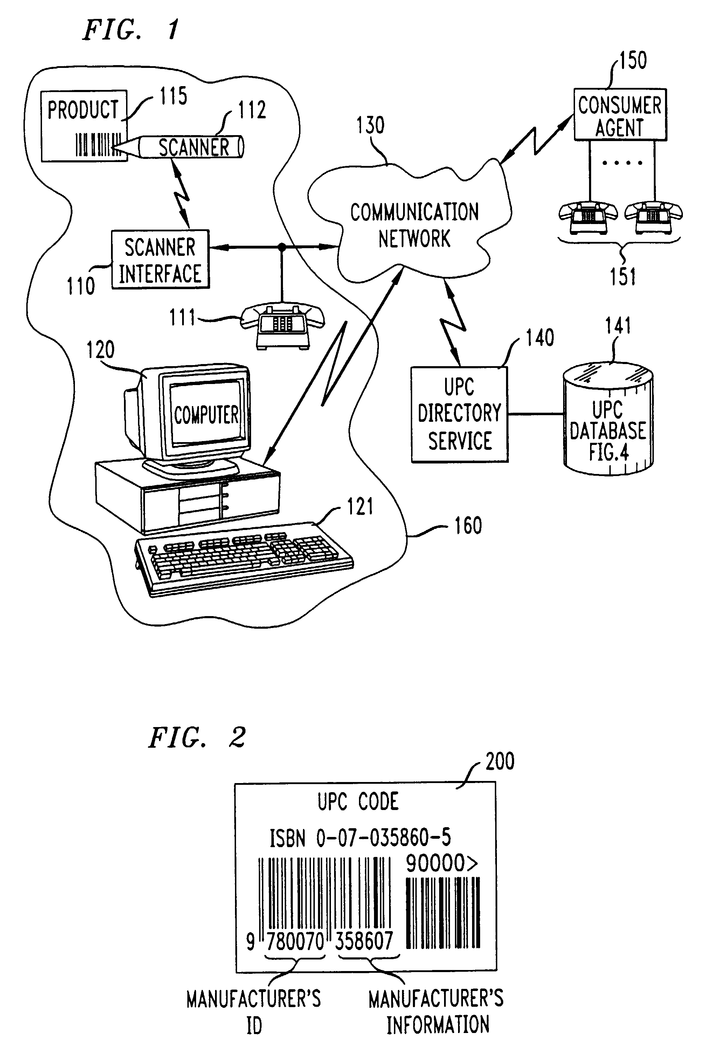

In the following description, each item or block of each figure has a reference designation associated therewith, the first number of which refers to the figure in which that item is first located (e.g., 110 is located in FIG. 1).

With reference to FIG. 1, while the present invention will illustratively be described communication network 30 which enables telephone communication connections between the different locations 60, 140, 150, for use in a telephone it is contemplated that other types of communication networks, such as data networks, Internet, etc., may be utilized to provide connections between the different locations. Thus, more generally, the user would enter a network address which may be a telephone number, name identifier, World Wide Web Universal Resource Identifiers (URIs), etc., used to establish a connection to the UPC directory service. Additionally, more generally the customer service agent 150 may be a "live" agent, an interactive voice response system, interactive document retrieval system, a fax server, or a computer server (e.g., a World Wide Web server) which transmits electronic multimedia information or documents.

The present invention recognizes that consumers may have a problem locating customer service (also equivalently referred to herein as a consumer or product agent) information (e.g., a network address or telephone number) associated with a particular product or service that a consumer may have purchased. Typically, the products that a consumer purchases may include a unique product identifier code (e.g., a Universal Product Code (UPC)) located on the product itself or on literature or packaging associated with the product. The present invention enables a consumer (also referred to herein as a user) to establish a communication connection to a customer service representative or agent associated with that product using the UPC information. This is accomplished by the user first establishing a connection to a UPC directory service apparatus 140 using a predefined network address and thereafter entering the UPC information associated with the product. At the UPC directory service apparatus 140, the UPC information is converted to the network address of the customer service agent associated with that product. The UPC service center then transfers the user's connection to the customer service network address.

Shown in FIG. 1 are illustrative end-user apparatus at a first location 160, UPC directory service apparatus 140-141 at a second location, and consumer product agent apparatus 150 at a third location, all connected by communication facilities 130, e.g., switched communication network or Internet, used to establish connections between the various locations. Illustratively, at the first location 160, the end-user apparatus may include a station set 111 and a scanner interface 110 having a wired or wireless connection to a scanner pen 112 to enable entry of UPC information. Alternatively, the user location 160 may include a computer 120 and a keyboard 121 to enable a user to establish a network connection to the UPC directory service and to enter UPC information associated with the product.

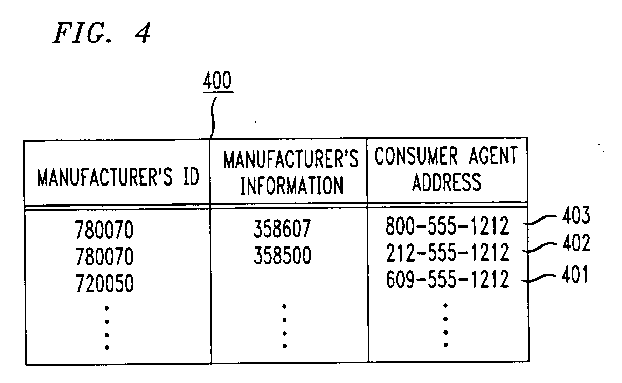

At the second location, an illustrative UPC directory service apparatus 140 may be processor controlled to control communication access to communication network 130 and database 141. Database 141 stores information, such as that shown by Table 400 of FIG. 4, which is used to convert the manufacturer's product identifier codes and other information to consumer agent telephone numbers.

The third location is the consumer agent location which, illustratively, may include a communication system 150 having one or more station sets 151 to enable consumer agents to answer calls thereat. Thus, the principles of the present invention may be utilized with any of a variety of terminal apparatuses, network arrangements, and signaling formats.

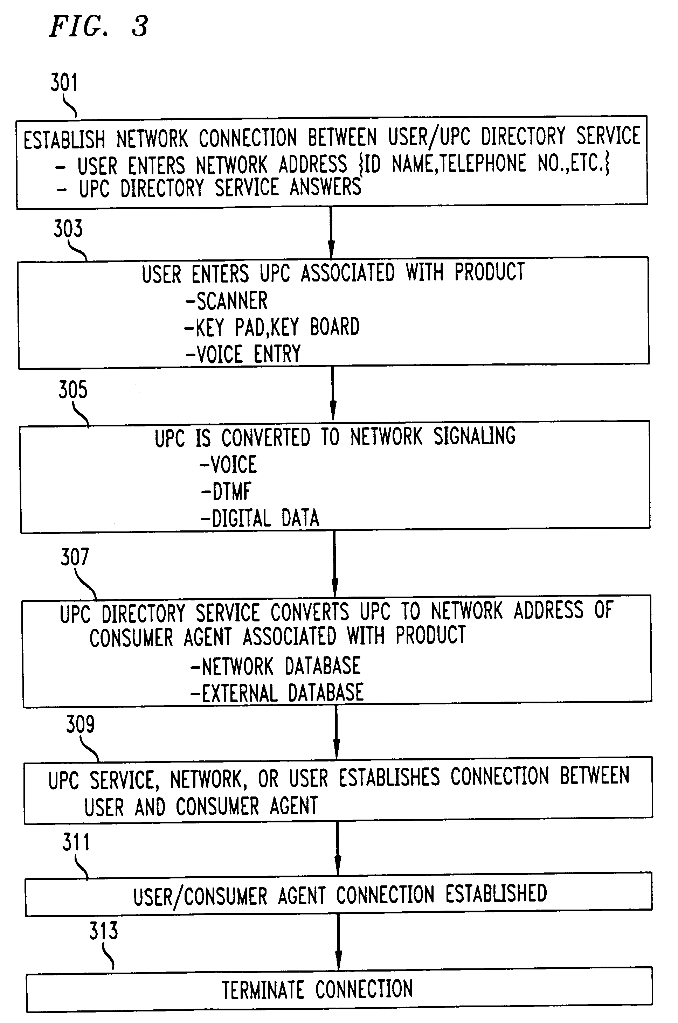

With joint reference to FIGS. 1 through 4, we describe the operation of the present invention. In step 301, a user enters a predefined network address to establish a network connection between the user, at location 160, and the UPC directory service apparatus 140. This predefined network address, illustratively, may be a common well-known 800-number which is utilized to enable a user or consumer to call a consumer agent associated with the product that the consumer has purchased.

The following description assumes that the user's location, UPC directory service location, and product agent locations utilize telephone-based apparatuses connected to a telephone communication network. Consequently, in step 301 a user enters a network address of the UPC directory service via the dial pad of station set 111. When the directory service 140 answers the call, in one embodiment, utilizing a voice-response system, the user is requested to enter the UPC information associated with the product. As will be discussed later, the UPC information is used to establish a connection to a consumer agent. The UPC information is typically digits, but may more generally be alphanumeric characters.

In step 303, the user can enter the digits of the UPC information, located on the product 115, via the keypad of station set 111. If the user is at a computer 120, he/she can enter the digits of the UPC information via the keyboard 121. As shown in FIG. 2, the UPC information 200 entered may include the manufacturer identifier code (e.g., 780070) alone or in combination with additional manufacturer information (e.g., 358607).

Returning to FIG. 1, the user may alternatively use the scanner pen 112 to read the "bar code" UPC information from the product literature 115 directly. This UPC information is sent by scanner pen 112 to scanner interface 110 where it is converted for transmission over a facility, using a compatible signaling format, to the communication network 130.

According to another embodiment, an apparatus such as a ScanFone (trademark of U.S. Order Company) may be utilized to read the UPC information. The ScanFone system is described in U.S. patent No. 4,947,028, issued to J. M. Gorog on June 8, 1993. The ScanFone system is a telephone with an attached credit card reader, a small alphanumeric display, and bar-code scanner. While the ScanFone system is typically used to pay bills and order merchandise from catalogs by scanning bar codes, it can also be utilized to scan bar codes which would be utilized by our present invention to establish a communication connection to a consumer agent.

Alternatively, UPC directory service apparatus 140 may be arranged to receive and interpret voice responses from the user. In such an arrangement, the user may then recite the manufacturer's identifier digits and, if needed, the manufacturer's information digits, shown as the digit sequences 780070 and 358607, respectively, in FIG. 2.

In step 305, at the user's location 160, apparatus is used to convert the UPC information received to the appropriate signaling necessary to communicate with communication network 130. For example, when the user uses the dial pad of station set 111 to enter the UPC information, it would be converted to DTMF signaling and sent via communication network 130 to the UPC directory service apparatus 140 which decodes the DTMF signaling into the UPC information. If the digits of the UPC information are entered via the keyboard 121 of computer 120, it can be converted to DTMF or digital data for transmission to UPC directory service 140. Alternatively, if the UPC directory service 140 has a voice recognition capability, then the user can recite the UPC digits directly into the handset of station set 111. The UPC directory service 140 then would convert this voice signal into the UPC information. If the user uses the scanner pen 112, the scanner interface 110 would convert the information to either DTMF or digital data for transmission to UPC directory service apparatus 140.

In step 307, the UPC directory service apparatus 140 receives the UPC information as a voice signal, DTMF signal or digital data and converts it into the UPC information. As previously noted with reference to FIG. 2, the UPC information would include a manufacturer's identifier and may also include additional manufacturer's information. Using this UPC information, the UPC directory service apparatus 140 accesses Table 400 of FIG. 4, located in UPC database 141, to obtain the network address of the consumer agent associated with the UPC product code. With reference to 401 of Table 400, if the UPC information entered includes only the manufacturer's identifier--for example, the digits 720050--the consumer agent network address obtained from Table 400 would be 609-555-1212. As shown by 402 and 403 in Table 400, when the UPC information includes both a manufacturer's identifier and manufacturer's information, different consumer agent network addresses can be accessed based on the manufacturer's information. Thus, UPC information having the same manufacturer identifier and different manufacture information fields would access different network addresses, as shown by 402 and 403.

It should be noted that the UPC directory service 140 and its associated database 141 (FIG 4) may be included as part of the communication network (not shown), included as part of the apparatus at the user's location 160 (not shown), or may be external to the communication network (as shown in FIG. 1).

After the UPC directory service 140 obtains the consumer agent network address, in step 309, it signals communication network 130, using the appropriate signaling, to establish a connection between the user and the consumer agent location 150 using the consumer agent network address. This connection(s) between the user location 140 and consumer agent 150 may be established in one of three ways.

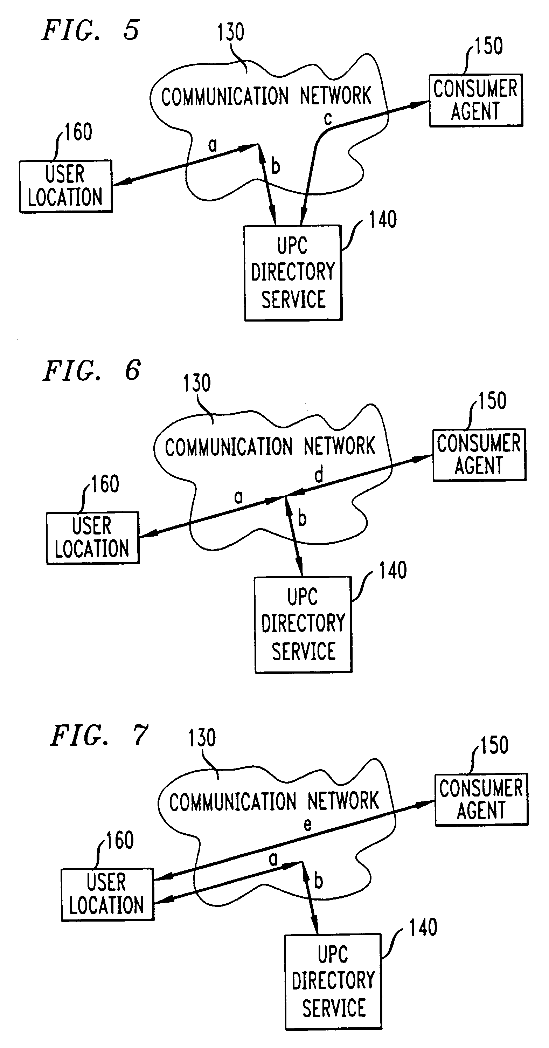

With reference to FIG. 5, the user location 160 and UPC directory service ∼ 140 connection utilizes path **a** and path **b** through one or more nodes of communication network 130. The UPC directory service 140 then establishes a connection, path **c**, between the user location 160 and the consumer agent 150 so that communications between user location 160 and consumer agent 150 occur through the UPC directory service location 140 via paths **a**, **b** and **c**.

Another possible connection arrangement is shown in FIG. 6 where the UPC directory service 140 sends the consumer agent network address to communication network 130 to enable it to transfer the connection over paths **a** and **b** to a new connection over paths **a** and **d** between the user location 160 and consumer agent 150. Optionally, if desired the UPC directory service 140 can signal communication network 130 to maintain path **b** and to add path **c** to the established connection of paths **a** and **b** so that there is a resulting "bridging" type connection between user location 160, UPC directory service 140, and consumer agent 150.

With reference to FIG. 7, a third connection arrangement is shown. In FIG. 7, the UPC directory service 140 sends the consumer agent network address to the user location 160 to enable the user location to establish the connection path e between the user location 160 and the consumer agent location 150. Optionally, if desired the connection paths a and **b** may be maintained or disconnected.

In step 311, a connection is established between the user and the consumer agent, at one of the station sets 151, to enable the user and the agent to communicate. In step 313, communication may be terminated by either the user, the consumer agent or the service.

What has been described is merely illustrative of the application of the principles of the present invention. Other arrangements and methods can be implemented by those skilled in the art without departing from the scope of the present invention.

## Claims

1. A method of establishing a connection over a communication network. comprising the steps of
establishing a connection over the network from a first location to a second location using a second location network address entered at the first location,
sending, from the first location, a product identifier code associated with a product over the established connection to the second location,
converting, at the second location, the product identifier code to a third location network address associated with that product, and
establishing a connection between the first location and a third location using the third location network address.

2. The method of claim 1 wherein the establishing step includes the step of
sending the third location network address to the network to enable the network to establish a connection between the first and the third locations.

3. The method of claim 1 wherein the establishing step includes the step of
sending the third location network address to the first location to enable the first location to establish a new connection between the first and the third locations.

4. The method of claim 2 or claim 3 wherein the connection between the first location and second location is disconnected.

5. The method of claim 1 wherein the establishing step is performed at the second location, the second location establishes a new connection to the third location so that the first and third locations communicate through the second location.

6. The method of claim 1 wherein the sending step includes the steps of
scanning the product identifier code using a scanner device, and
converting the product identifier code to a signal which is compatible with the communication network.

7. The method of claim 1 wherein the product identifier code is a universal product code (UPC).

8. The method of claim 1 wherein the communication network is a telephone network and the network addresses are telephone numbers.

9. The method of claim 1 wherein the communication network is the Internet and the network addresses are URI numbers.

10. The method of claim 9 wherein the product identifier code includes alphanumeric characters and wherein a station set is used to send a portion of the characters of the product identifier code over the established connection.

11. The method of claim 1 wherein the second location is part of the communication network.

12. The method of claim 1 wherein the product identifier code includes alphanumeric characters and wherein a keyboard of a computer is used to send a portion of the characters of the product identifier code over the established connection.

13. Communication apparatus for interfacing to a communication network, comprising
means for receiving a product identifier code from a first location over a connection of the network,
means for converting the received product identifier code to an agent network address, and
means for utilizing the agent network address to establish a connection between the first location and the agent location.

14. The apparatus of claim 13 wherein said converting means includes
database means for storing a plurality of product identifier codes, each code associated with a network address, and wherein
said converting means accesses said database means using a product identifier code to obtain a third location network address which is signaled over said facility.

15. A method of operating a communication apparatus for interfacing to a communication network, comprising the steps of
receiving a product identifier code from a first location over a connection of the network,
converting the received product identifier code to an agent network address, and
utilizing the agent network address to establish a connection between the first location and the agent location.

16. The method of claim 15 including the step of
storing in a table means a plurality of product identifier codes, each code associated with a network address, and wherein the converting step includes the step of
accessing the table means using a product identifier code to obtain an associated network address which is signaled over said facility.
